# EUROPEAN PATENT APPLICATION

(11) **EP 3 663 202 A1**
(43) Date of publication of application: **10.06.2020**
(21) Application number: 19213270.2
(22) Date of filing: 03.12.2019
(51) Int. Cl.: B64D 11/02, B64D 11/00, B64D 11/06, B64C 1/18, A61G 3/08

(54) **AISLE TRACK SYSTEM FOR AIRCRAFT AND ACCESSIBLE LAVATORY CONFIGURATION**

(30) Priority: 03.12.2018 US 201862774543 P
(71) Applicant: B/E Aerospace, Inc., Winston- Salem, NC 27105 (US)
(72) Inventor: JOHNSON, Glenn A., WINSTON-SALEM, NC 27105 (US)
(74) Representative: Algemeen Octrooi- en Merkenbureau B.V.

(57) **Abstract**

An arrangement for a passenger carrying aircraft (100) including a passenger cabin (102), an aisle (104) extending in a longitudinal direction of the cabin, passenger seats (106) positioned along opposing sides of the aisle (104), and an aisle track system (108) disposed along the aisle (104) including spaced first and second floor tracks (110, 112) extending in a longitudinal direction of the aisle (104) adapted to engage with an object adapted to be conveyed down the aisle or a carriage (148) for conveying an object down the aisle (104). The aisle track system (108) may extend into a lavatory (120) or lateral tracks (114) intersecting the aisle track system (108) may extend into a lavatory (120) such that a wheelchair can be conveyed down the aisle and into the lavatory while remaining secured to the deck.

## Description

Conventional commercial passenger aircrafts comprise rows of passenger seats, which rows typically extend perpendicular to the longitudinal axis of the aircraft and are arranged along opposed sides of one or more longitudinal aisles that extend parallel to the aircraft longitudinal axis. The aisles provide a passageway for passengers entering or leaving the aircraft, or for cabin crew.

Whereas the longitudinal aisles are easy accessible for mobile passengers, they are not perfectly suited for wheel chairs or carts to be transported through the aircraft. Accordingly, there is a need for improvement of transportation of wheeled carts or chairs through longitudinal aisles in the passenger cabin of a passenger carrying aircraft.

Cargo handling systems are utilized in cargo-carrying aircraft for loading, moving and securing cargo containers. Conventional systems include floor conveyors and rolling panels that track along the aircraft floor. Cargo containers are secured in place in cargo compartments to prevent shifting that would otherwise occur during takeoff, landing, and from inflight turbulence.

While cargo handling systems are utilized in FAA certified cargo-carrying aircraft, certain passenger carrying aircraft could benefit from a cargo handling system. For example, longitudinal aisles provide an opportunity for locating a track system that could be used to pass cargo containers through the passenger cabin, secure beverage and meal carts during food service, secure a wheelchair or a seat, etc.

To fulfill the above identified need for improved transportation facilities in a passenger aircraft, in a first aspect, the present invention provides an arrangement for a passenger carrying aircraft including a passenger cabin, an aisle extending in a longitudinal direction of the passenger cabin, passenger seats positioned along opposing sides of the aisle, and an aisle track system disposed along the aisle, the aisle track system including spaced first and second floor tracks extending in a longitudinal direction of the aisle configured to engage with an object adapted to be conveyed down the aisle or a carriage for conveying an object down the aisle.

In some embodiments, the arrangement may further include a lavatory disposed at one end of the aisle, wherein the spaced first and second floor tracks may extend into the lavatory.

In some embodiments, the lavatory may include a toilet positioned near one end of the spaced first and second floor tracks, a sink positioned to one side of the spaced first and second floor tracks, and a door assembly.

In some embodiments, the door assembly may include a swinging door and a sliding door, wherein the sliding door when closed meets the swinging door when closed.

In some embodiments, the sink may be mounted to a wall perpendicular to an entrance to the lavatory, the sink may taper inward in a direction of a lavatory floor, an area immediately below the sink may be unobstructed, and plumbing associated with the sink may be mounted in or behind the wall to which the sink is mounted.

In some embodiments, the arrangement may further include a lavatory positioned laterally adjacent the aisle and lateral extensions of the first and second floor tracks extend into the lavatory.

In some embodiments, each of the first and second floor tracks may include a flange overhanging a recess and at least one break in the flange adapted to insert a guide affixed to the object or to the carriage to engage the object or the carriage in the floor tracks.

In some embodiments, the first and second floor tracks may be embedded in floor panels or may be affixed to floor panels.

In some embodiments, the arrangement may further include at least one lateral track system extending in a lateral direction of the aisle track system, the at least one lateral track system adapted to tack laterally at least one aisle passenger seat.

In some embodiments, the object may be a container, a food or beverage cart, a seat, or a wheelchair.

In some embodiments, the arrangement includes at least one lateral track system intersecting the aisle track system, the at least one lateral track system including spaced first and second floor tracks extending in a lateral direction to the aisle adapted to track the object or the carriage laterally with respect to the aisle.

In some embodiments, the arrangement may further include a lavatory disposed at one end of the aisle and the aisle tracks extending into the lavatory, or a lavatory disposed laterally adjacent the aisle and the at least one lateral track system extending into the lavatory.

In some embodiments, the lavatory may include a toilet positioned along a back wall of the lavatory, a sink mounted to a wall perpendicular to the back wall, and a door assembly, wherein the door assembly may include a swinging door and a sliding door, wherein the sliding door when closed meets the swinging door when closed, and wherein the sink may taper inward in a direction of a lavatory floor, an area immediately below the sink may be unobstructed, and plumbing associated with the sink may be mounted in or behind the wall to which the sink is mounted.

Embodiments of the invention can include one or more or any combination of the above features.

Implementations of the inventive concepts disclosed herein may be better understood when consideration is given to the following detailed description thereof. Such description makes reference to the included drawings, which are not necessarily to scale, and in which some features may be exaggerated, and some features may be omitted or may be represented schematically in the interest of clarity. Like reference numerals in the drawings may represent and refer to the same or similar element, feature or function. In the drawings:
FIG. 1 is a top plan view of a passenger cabin of a passenger carrying aircraft including track systems and lavatory configurations according to the invention;
FIG. 2 is a view into a lavatory positioned in the passenger cabin having a door, tapering sink, and aisle track extension for accommodating an engaged wheelchair;
FIG. 3 is a view into the lavatory of FIG. 2 showing the door in an open position and the aisle track extension into the lavatory floor;
FIG. 4 is a fragmentary perspective view of a passenger cabin showing a seat engaged in the aisle track system;
FIG. 5 is a fragmentary perspective view of a passenger cabin showing a generic container engaged in the aisle track system;
FIG. 6 is a fragmentary perspective view of a passenger cabin showing a deployable flight attendant step secured to a seat element; and
FIG. 7 is a fragmentary perspective view of a passenger cabin showing a deployable flight attendant step in use.

The present invention is described hereinafter with reference to the accompanying drawings in which exemplary embodiments are shown. However, the present invention may be embodied in many different forms and should not be construed as limited to the representative embodiments set forth herein.

With reference to the drawing figures, arrangements for passenger cabins for passenger carrying aircraft are disclosed including at least one longitudinal aisle and an aisle track system for conveying objects down the aisle. The arrangements may optionally include at least one lateral track system that intersects the aisle track system such that objects conveyed down the aisle can be transitioned to the at least one lateral track to convey the objects laterally, for example, to convey passenger seats or a wheelchair down the aisle and laterally from the aisle. A lavatory may be positioned at one end of the track system with the tracks extending into the lavatory such that, for example, a wheelchair can be conveyed down the aisle while remaining secured to the tracks and the deck. A lavatory may also be positioned laterally adjacent the aisle track system with a lateral track system extending from the aisle track system into the lavatory. Other combinations and arrangements of aisle and lateral track systems can be implemented depending on need and/or the layout of the passenger cabin.

The invention further provides lavatory configurations accessible by the track systems disclosed herein. For example, the lavatory may be equipped with a toilet and sink, with the sink positioned to one side of the tracks and having a sink that tapers inward in a direction of the lavatory floor and plumbing associated with the base housed in or behind the wall to which the sick is mounted such that the area immediately below the sink remains unobstructed to accommodate the width of a wheelchair. The toilet may be disposed against a wall facing the track ends and the sink may be disposed against a wall perpendicular to the wall of the toilet such that the sink faces a side of the tracks. This arrangement allows use of both the sink and toilet appliances while a wheelchair remains engaged in the tracks.

Various arrangements and combinations of aisle tracks and optional lateral tracks can be utilized to reconfigure the passenger cabin to generally move secured items throughout the cabin. Non-limiting examples of objects include containers, food and beverage carts, seats and wheelchairs. Implementations of the track systems may further include integrated lighting among other features to draw attention to the track locations.

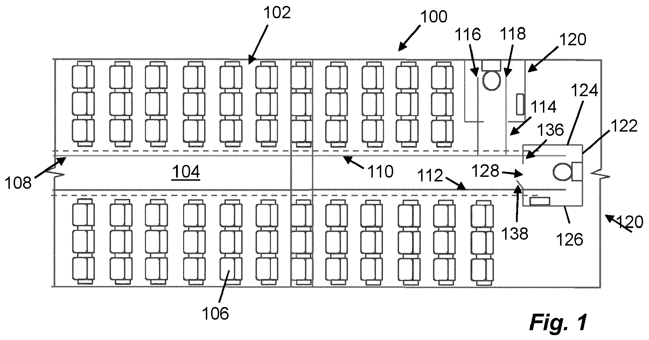

FIG. 1 shows a non-limiting example of an arrangement for a passenger carrying aircraft at 100. The arrangement includes a passenger cabin 102, an aisle 104 such as a center aisle extending in a longitudinal direction of the passenger cabin, and passenger seats 106 positioned along opposing sides of the aisle. While the passenger cabin 102 shown is an economy class cabin, business and first class cabins may also benefit from the track systems disclosed herein. While the passenger cabin 102 shown includes a single longitudinal aisle 104 bisecting the cabin, other cabin layouts for widebody aircraft may include two longitudinal aisles dividing the seats into port, starboard and center columns. Passenger seats may be any type. In a non-limiting example, the seats shown are economy class seats arranged to form rows including aisle, center and window seats sharing frame elements.

An aisle track system 108 disposed along the aisle 104 includes spaced first and second floor tracks 110, 112 extending in a longitudinal direction of the aisle. The first and second floor tracks 110, 112 are parallel and each may be disposed near its edge of aisle to position the tracks apart and out of the way of the main foot traffic down the aisle. Wide spacing further better accommodates large objects such as containers, wheelchairs, etc. Track number and spacing may be customized depending on application and object type to be conveyed.

In use, object guides or carriages associated with conveying objects down the aisle engage in the first and second tracks at one of a plurality of track entry/exit locations as discussed further below. For example, an object engaging the tracks at a first location near a forward end of the passenger cabin may exit the tracks at another location such as a seat row, lavatory, galley or storage compartment. In a particular application, food and beverage carts may engage the aisle tracks at a forward galley and exit the aisle tracks at an rear galley and may remain engaged in the tracks while between the two galley locations, thus securing the carts to the tracks and deck during food and beverage surface and when transporting carts between the two galley locations.

The arrangement 100 may further include at least one lateral track system 114 each including spaced first and second tracks 116, 118 that intersect the first and second floor tracks 110, 112 of the aisle track system 108. Track intersections may be perpendicular and utilize cross tracks to transition between aisle tracks and lateral tracks, or may utilize switch tracks with lateral movement to transition between aisle tracks and diverging lateral tracks. For example, in use, aisle tracks may used to convey a seat or wheelchair down the aisle to a predetermined row, at which point the seat or wheelchair is transitioned to lateral tracks to move the seat or wheelchair away from the aisle to a predetermined location at which the seat or wheelchair can be secured, for example to floor tracks utilizing track fasteners.

The arrangement for the passenger cabin 102 may further include at least one lavatory 120. As shown in FIG. 1 a lavatory 120 may be positioned at one end of an aisle track system 108, at one end of a lateral track system 114, a lavatory at the end of each track system, or elsewhere depending on the cabin configuration. For lavatories positioned at one end of a track system, whether an aisle track system 108 or lateral track system 114, the first and second tracks of the respective system may extend into the lavatory such that, for example, a wheelchair may remain secured to the tracks and deck while in the lavatory and while being conveyed from a seat location to the lavatory and back.

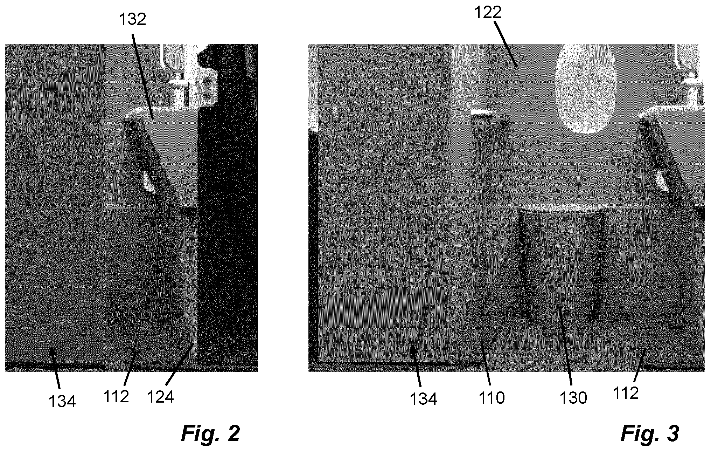

As shown in FIGS. 1-3, the lavatory 120 may have a construction generally including a back wall 122, opposing sidewalls 124, 126, and a lavatory entrance 128 opposite the back wall. The opposing sidewalls 124, 126 may be parallel to each other and perpendicular to the back wall 122 and threshold of the entrance. A toilet 130 may be disposed against the back wall 122 arranged facing the entrance such that the first and second tracks 110, 112 of the aisle tracks system 108 or the first and second tracks 116, 118 of the lateral track system 114 span a forward end of the toilet such a wheelchair can be positioned close to the toilet to facilitate passenger transfer from the wheelchair to the toilet and back while the wheelchair remains secured to the deck.

A sink 132 may be disposed against, such as mounted to, one of the sidewalls 124, 126 perpendicular to the back wall 122. The sink 132 may be mounted facing and to one side of the aisle or lateral tracks such that the sink can be used by the passenger while in their wheelchair. In some embodiments, the sink 132 may taper inward in a direction of the floor and plumbing associated with the sink may be mounted in or behind the sidewall 124, 126 to which the sink is mounted such that the area immediately below the sink is unobstructed for facilitating wheelchair access in the lavatory.

The lavatory 120 may further include a door assembly 134 having a first door 136 and a second door 138. The first and second doors 136, 138 are separate and the first door 136 may be slidably coupled to a front wall of the lavatory while the second door 138 may be a swinging door hinged along one side to a doorjamb. The two-door configuration allows the second door 138 to be utilized by passengers of full mobility while the first door 136 can remain closed, and both the first and second doors can be opened to expand the entrance to the lavatory to accommodate passengers with limited mobility, for example, for wheelchair access. The leading edge of the first door 136 when closed may meet the free edge of the second door 138 when closed to together close the entrance to the lavatory 120. Other door configurations can be utilized such as double swinging doors or double sliding doors, among other configurations the purpose being to provide a smaller entrance for use by passengers with full mobility and a larger entrance as needed for passengers with limited mobility.

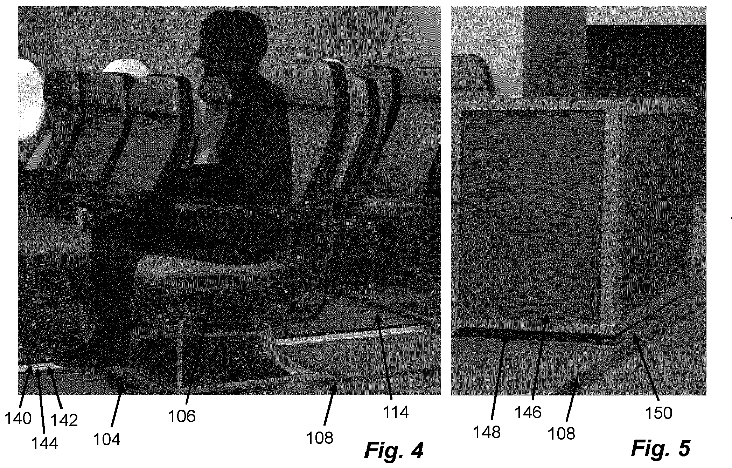

FIG. 4 shows a non-limiting example of an aisle track system 108 disposed in a longitudinal center aisle 104 operable for conveying items (e.g., passenger seats, beverage carts, crates, etc.) up and down the longitudinal center aisle. A lateral track system 114 is disposed in at least one of the seat rows and is operable for tracking laterally at least an aisle passenger seat 106 of the row. In use, the aisle passenger seat 106 may track from its designated row into the longitudinal center aisle 104 by way of the lateral track system 114. Once the aisle passenger seat 106 is positioned in the longitudinal center aisle 104, the passenger seat can then track forward or aft along the longitudinal track system. This allows the aisle passenger seat 106 to be moved from its designated row and position into the longitudinal center aisle 104 to free space within the seat row for another purpose (e.g., wheelchair securement, stowage of items, maintenance, etc.) The aisle and lateral track systems 108, 114 can be used to move items throughout the cabin while remaining secured to the tracks and deck. Items may lock in place at any or discrete positions along the track lengths.

As best shown in FIG. 4, each individual track of the respective aisle track system 108 and lateral track system(s) 114 may include a flange 140 overhanging a recess 142 or a recess 142 disposed between an upper flange 140 and a lower flange 144 (e.g., C-shaped channel) for engaging with a guide on a container or carriage. Tracks may include breaks at predetermined positions along their lengths, such as at intersection and track entrance and exit points for inserting and removing guides.

In keeping with FIG. 4, FIG. 5 shows a container such as a crate 146 secured to the aisle track system 108 thereby allowing the crate to be conveyed forward or back along the longitudinal center aisle 104. The aisle track systems 108 can be used to reconfigure the passenger cabin or generally move secured items throughout the passenger cabin or into crew areas. FIG. 5 furthers shows the crate 146 disposed on a carriage 148 and the carriage having engagement features 150 for engaging the guide tracks of the track systems.

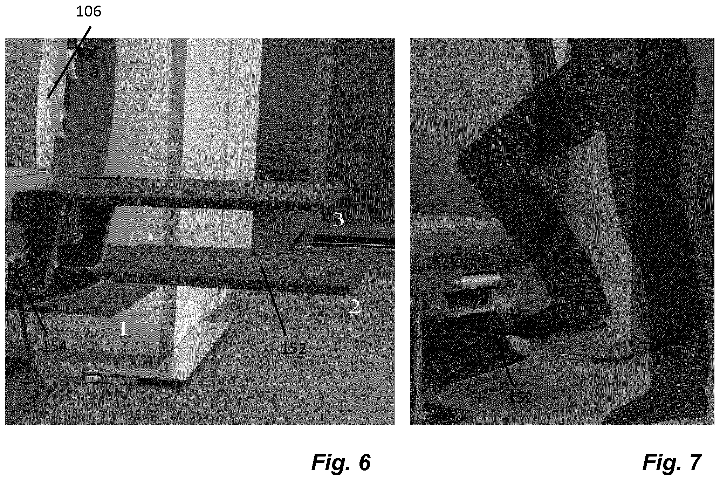

FIG. 6 shows a repositionable dual-purpose seat slide and step 152. The aisle-facing side of a passenger seat 106 (e.g., aisle seat in a seating row) may have at least one receiver 154 for attaching the seat slide and step 152 to a seat element in various use positions. For example, the seat slide and step 152 may stow under the seat in a first position "1" corresponding to a stowed position, attach alongside the seat to a seat element in a second position "2" corresponding to a step position for the flight crew to access overhead items, and may attach alongside the side to a seat element in a third position "3" corresponding to a seat slide position for helping transfer a limited mobility passenger into the passenger seat. In the third position "3", the step may be generally coplanar with the top of the seat bottom to facilitate horizontal sliding transfer. In the second and third positions "2" and "3" the seat slide and step 152 may extend into the longitudinal center aisle. In the first position "1" the seat slide and step 152 may stow below or behind the seat, or elsewhere. The seat slide and step 152 may utilize separate dedicated receivers in the second and third positions "2" and "3" or may utilize the same receiver in both positions and may be adjustable between raised and lowered positions.

FIG. 7 shows the seat slide and step 152 being used as a flight attendant step for accessing overhead items.

The foregoing description provides embodiments of the inventions by way of example only. It is envisioned that other embodiments that are within the scope of the invention as defined in the appended claims may perform similar functions and/or achieve similar results.

## Claims

1. An arrangement for a passenger carrying aircraft (100), comprising:
a passenger cabin (102);
an aisle (104) extending in a longitudinal direction of the passenger cabin (102);
passenger seats (106) positioned along opposing sides of the aisle (104); and
an aisle track system (108) disposed along the aisle (104), the aisle track system (108) including spaced first and second floor tracks (110, 112) extending in a longitudinal direction of the aisle (104) configured to engage with an object adapted to be conveyed down the aisle (104) or a carriage (148) for conveying an object down the aisle.

2. The arrangement according to claim 1, further comprising a lavatory (120) disposed at one end of the aisle (104), and wherein the spaced first and second floor tracks (110, 112) extend into the lavatory (120).

3. The arrangement according to claim 2, wherein the lavatory (120) includes a toilet (130) positioned near one end of the spaced first and second floor tracks (110, 112), a sink (132) positioned to one side of the spaced first and second floor tracks (110, 112), and a door assembly (134).

4. The arrangement according to claim 3, wherein the sink (132) is mounted to a wall (124, 126) perpendicular to an entrance (128) to the lavatory (120), the sink (132) tapers inward in a direction of a lavatory floor, an area immediately below the sink is unobstructed, and plumbing associated with the sink (132) is mounted in or behind the wall (124, 126) to which the sink (132) is mounted.

5. The arrangement according to one or more of the preceding claims, further comprising a lavatory (120) positioned laterally adjacent the aisle (104) and lateral extensions (114, 116) of the first and second floor tracks (110, 112) extend into the lavatory (120).

6. The arrangement according to one or more of the preceding claims, wherein each of the first and second floor tracks (110, 112) include a flange (140) overhanging a recess (142) and at least one break in the flange (140) adapted to insert a guide affixed to the object or to the carriage (148) to engage the object or the carriage (148) in the floor tracks (110, 112).

7. The arrangement according to one or more of the preceding claims,, wherein the first and second floor tracks (110, 112) are embedded in floor panels or are affixed to floor panels.

8. The arrangement according to one or more of the preceding claims, further comprising at least one lateral track system (114) extending in a lateral direction of the aisle track system (108), the at least one lateral track system (114) adapted to track laterally at least one aisle passenger seat (106).

9. The arrangement according to one or more of the preceding claims, wherein the object (146) is a container, a food or beverage cart, a seat, or a wheelchair.

10. The arrangement for a passenger carrying aircraft (100), further comprising:
at least one lateral track system (114) intersecting the aisle track system (108), the at least one lateral track system (114) including spaced first and second floor tracks (116, 118) extending in a lateral direction to the aisle (104) adapted to track the object or the carriage (148) laterally with respect to the aisle (104).

11. The arrangement according to one or more of the preceding claims,, further comprising a lavatory (120) disposed laterally adjacent the aisle (104) and the at least one lateral track system (114) extending into the lavatory (120).

12. The arrangement according to claim 11, wherein the lavatory (120) includes a toilet (130) positioned along a back wall (122) of the lavatory, a sink (132) mounted to a wall (124, 126) perpendicular to the back wall (122), and a door assembly (134).

13. The arrangement according to one or more of the preceding claims 3 -12, wherein the door assembly (134) includes a swinging door (138) and a sliding door (136), wherein the sliding door (136) when closed meets the swinging door (138) when closed.

14. The arrangement according to one or more of the preceding claims 5-13, wherein the sink (132) tapers inward in a direction of a lavatory floor, an area immediately below the sink (132) is unobstructed, and plumbing associated with the sink (132) is mounted in or behind the wall (124, 126) to which the sink (132) is mounted.
